Europäisches Patentamt

European Patent Office

Office européen des brevets

(19)

(11) Numéro de publication : **0 195 795**
**B1**

(12) **FASCICULE DE BREVET EUROPÉEN**

(45) Date de publication du fascicule du brevet :
07.09.88

(21) Numéro de dépôt : **85904645.0**

(22) Date de dépôt : **25.09.85**

(86) Numéro de dépôt international :
**PCT/FR 85/00262**

(87) Numéro de publication internationale :
**WO/8602118 (10.04.86 Gazette 86/08)**

(51) Int. Cl.⁴ : **E 04 B   1/346, F 24 J   2/00**

(54) **STRUCTURE ARCHITECTURALE ORIENTABLE.**

(30) Priorité : **25.09.84 FR 8414726**

(43) Date de publication de la demande :
**01.10.86 Bulletin 86/40**

(45) Mention de la délivrance du brevet :
**07.09.88 Bulletin 88/36**

(84) Etats contractants désignés :
**CH DE FR GB LI NL SE**

(56) Documents cités :
**EP-A- 0 091 626**
**FR-A- 2 385 861**
**FR-A- 2 491 598**
**US-A- 3 125 189**

(73) Titulaire : **PIGOUT, Jean-Noel**
**15, rue des Maisons Neuves**
**F-91700 Sainte Geneviève Des Bois (FR)**

(72) Inventeur : **PIGOUT, Jean-Noel**
**15, rue des Maisons Neuves**
**F-91700 Sainte Geneviève Des Bois (FR)**

(74) Mandataire : **Clisci, Serge et al**
**S.A. FEDIT-LORIOT CONSEILS EN PROPRIETE**
**INDUSTRIELLE 38, avenue Hoche**
**F-75008 Paris (FR)**

Jouve, 18, rue St-Denis, 75001 Paris, France

**0 195 795**

**Description**

La présente invention concerne une structure architecturale orientable susceptible d'être habitée.

Cette structure orientable,qui comprend une enceinte mobile en rotation dans laquelle est logée une ossature fixe, est particulièrement avantageuse dans la réalisation de maisons individuelles. Elle peut également être utilisée dans la réalisation de bâtiments d'exposition ou de spectacle, tels que notamment des musées.

Dans le domaine des constructions orientables on connaît, notamment du brevet US-A-3 125 189, une solution technique, utilisée dans les restaurants panoramiques, et qui comprend une plateforme annulaire mobile en rotation et située à l'intérieur d'une enceinte fixe du type baie vitrée.

Dans le domaine des maisons individuelles on connaît, notamment de FR-A-2 491 598 et EP-A-0 091 626, une autre solution technique selon laquelle l'ensemble de la construction, c'est-à-dire aussi bien l'enveloppe que l'ossature interne, est mobile en rotation sur des rails. Cette solution soulève des difficultés, entraîne des coûts très importants de réalisations et implique d'énormes besoins en énergie pour permettre le déplacement de l'ensemble de la structure compte-tenu de la masse ainsi que des frais d'entretien élevés.

On sait enfin que FR-A-2 385 861 propose une autre solution pour réaliser une habitation orientable, à savoir une maison sphérique ou sensiblement sphérique mobile en rotation autour de son axe vertical et dont l'hémisphère inférieur est plongé dans une cuve remplie d'un fluide porteur. Cette solution présente un grand nombre d'inconvénients sur le plan de la stabilisation et celui de la viabilisation.

Selon l'invention on préconise une nouvelle solution technique en proposant une structure orientable comprenant une enceinte ou enveloppe mobile en rotation et une ossature fixe logée dans ladite enceinte. Cette solution technique qui est différente des solutions antérieurement connues offre l'avantage, notamment par rapport aux constructions totalement mobiles, de limiter les coûts de fabrication, la masse mobile et les besoins en énergie pour la rotation de ladite masse.

La structure architecturale orientable selon l'invention, qui est susceptible d'être habitée, comporte (i) une enceinte ou enveloppe extérieure, et (ii) une ossature ou corps de construction interne, l'enceinte présentant une surface de révolution et étant susceptible d'être mobile en rotation autour de son axe, l'espace situé à l'intérieur de ladite enceinte comprenant une ossature fixe, de façon que l'enceinte puisse tourner alors que l'ossature reste fixe.

En bref, selon l'invention, l'enveloppe de la structure architecturale peut tourner alors que l'intérieur reste fixe.

Selon le mode préféré de réalisation suivant l'invention, la structure architecturale orientable comprend une enceinte comportant au moins une partie vitrée choisie parmi l'ensemble comprenant les baies vitrées et les portes-fenêtres et un élément situé à l'extérieur de ladite enceinte susceptible d'occulter au moins partiellement ladite partie vitrée en fonction de l'orientation de l'enceinte.

L'enceinte ou enveloppe est une surface de révolution, qui est mobile en rotation autour d'un axe vertical ou incliné par rapport à la verticale. Cette surface peut également présenter une section (selon un plan vertical) ovale ou elliptique. N'importe quelle forme de révolution convient, mais pour des questions d'esthétiques et des commodités d'aménagement de l'espace intérieur on préfère faire appel à des formes de révolution de section sensiblement circulaire ou ovale, telles que les calottes. La sphère et l'enveloppe de section ovale ont notamment l'avantage de bien s'intégrer dans la nature et de faciliter l'agencement dudit espace intérieur.

En pratique la calotte de révolution constituant l'enceinte est telle que dans un plan passant par l'axe de rotation de l'enceinte, l'angle correspondant à l'arc engendrant la surface de révolution est supérieur à $\pi/2$ et inférieur à $\pi$, et de façon avantageuse compris entre $(7/8)\,\pi$ et $(2/3)\,\pi$.

L'ossature, qui se trouve dans l'espace situé à l'intérieur de l'enceinte ou enveloppe, comprend au moins un palier ou étage, des cloisons portantes ou non portantes, un ou plusieurs escaliers, et est liée aux fondations. L'ossature comprend un système de roulement sur lequel repose l'enceinte, ledit système rendant ladite ossature et ladite enceinte solidaires entre elles et étant situé dans un plan perpendiculaire à l'axe de rotation de l'enceinte.

Plus précisément l'enceinte est montée de façon à pouvoir pivoter par sa base sur une embase circulaire disposée sur l'ossature. Chaque palier, niveau ou étage comporte au moins un moyen de roulement monté de façon étanche pour la rotation de l'enceinte par rapport à l'ossature.

L'élément d'occultation totale ou partielle de la partie vitrée de l'enceinte, qui est situé à l'extérieur de l'enceinte, constitue une paroi-volet permettant de masquer la partie vitrée en fonction de l'orientation de l'enceinte. De façon pratique cet élément d'occultation sera fixe ; néanmoins dans certains cas particuliers on pourra choisir un élément d'occultation également mobile autour de l'axe de rotation de l'enceinte.

Il est possible de venir masquer la partie vitrée par l'élément d'obturation du type « paroi-volet » fixe de dimension sensiblement analogue à la partie vitrée et de faire tourner l'enveloppe extérieure de la structure architecturale autour de son axe vertical jusqu'à la concordance de la baie vitrée avec le volet.

De même, il est possible de choisir toute autre orientation de l'enceinte de la structure architecturale entre 0° et 360° en fonction du moment du jour, de la saison, de la vue, de l'éclairage, de la température,

2

etc..., et ceci afin d'obtenir en permanence le confort maximum.

Une telle disposition permet d'avoir tous les avantages de la serre sans en avoir les inconvénients (trop froid l'hiver sans soleil, et trop chaud l'été). Elle permet d'avoir en plus de nombreux autres avantages.

L'enveloppe mobile en rotation autour d'un axe vertical peut être simplement animée automatiquement ou télécommandée par l'intermédiaire d'un moteur électrique de faible puissance dont le fonctionnement peut être commandé par un micro-ordinateur.

Il suffit d'un moteur de moins de 2 chevaux (i. e. environ 1,47 kW) pour faire effectuer un tour complet en deux minutes à une enveloppe sphérique de 9 à 10 mètres de diamètre et d'une masse de trois tonnes environ, telle que décrite ci-après.

D'autres avantages et caractéristiques de l'invention seront mieux compris à la lecture qui va suivre de la description des dessins annexés dans lesquels :

la figure 1 est une vue simplifiée d'une structure architecturale orientable et habitable selon l'invention ;

la figure 2 est une vue en coupe de la structure de la figure 1 ;

les figures 3, 4 et 5 représentent des détails grossis de la structure selon la figure 2 ;

la figure 6 est une vue en coupe représentant schématiquement un mode de montage des panneaux hexagonaux et/ou pentagonaux constituant l'enceinte ;

les figures 7 et 8 représentent schématiquement deux autres structures selon l'invention pour des édifices plus importants.

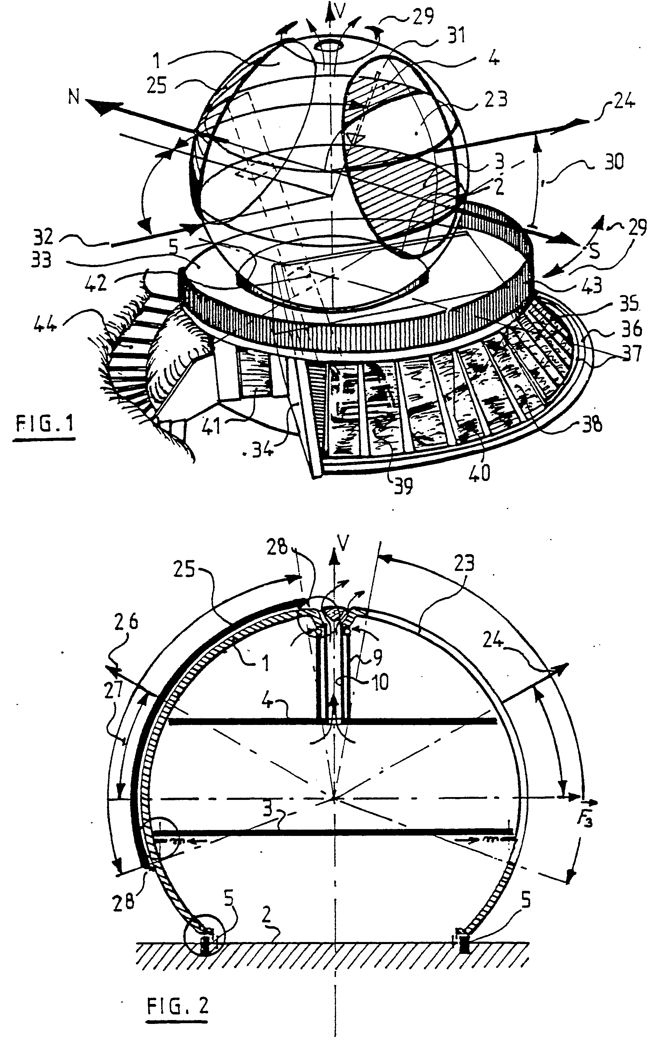

L'enveloppe sphérique 1 des figures 1, 2, 7 et 8 tourne autour d'un axe vertical V. Des niveaux 2, 3 et 4 de l'ossature sont ménagés à l'intérieur de l'enveloppe 1 et sont fixes et solidaires d'une embase circulaire 5 sur laquelle repose l'enveloppe sphérique 1 par l'intermédiaire d'un système de roulement circulaire qui est représenté figure 5, et qui exerce une force $F_1$ de soutien.

Le système de roulement peut être constitué de multiples façons. Il peut être comme sur la figure 5 constitué de billes d'acier 6 maintenues à distance les unes des autres par des anneaux reliés entre eux et constituant la cage de roulement.

Les billes 6 peuvent rouler dans une gorge circulaire 7 sur l'embase 5 permettant ainsi à l'enveloppe sphérique 1, qui repose sur ces billes 6, de pivoter.

Le chemin de roulement circulaire peut aussi être constitué par des roulettes fixées à la partie inférieure de l'enveloppe sphérique 1, lui permettant ainsi de rouler sur l'embase circulaire 5.

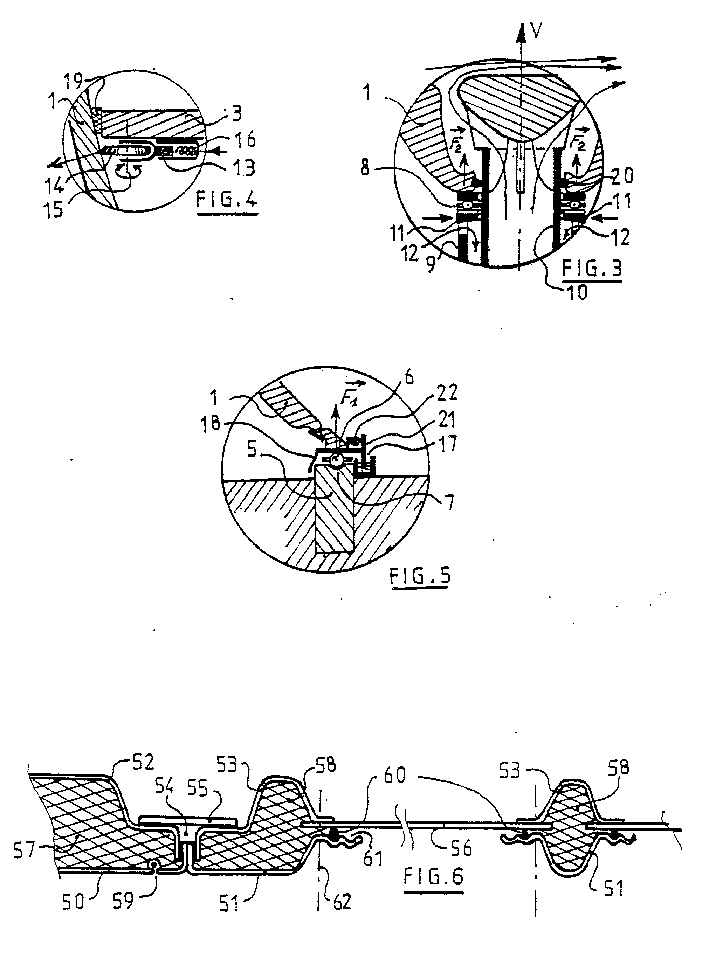

Pour faciliter la rotation de l'enveloppe sphérique, consolider sa position et mieux répartir les charges et contraintes de la structure, il peut être intéressant de prévoir un autre chemin de roulement 8, tel que représenté sur la figure 3.

Le chemin de roulement 8, disposé en couronne autour de l'axe V, repose sur un tube extérieur 9 concentrique à un tube 10. Il soutient la partie supérieure de l'enveloppe sphérique 1. Une pression $F_2$ est exercée de bas en haut sur l'enveloppe sphérique 1. Cette pression $F_2$ est ajustable en enfonçant des coins 11 ou par tout autre procédé. Ainsi le poids de l'enveloppe sphérique 1 est réparti sur la circonférence de l'embase 5 et sur le tube 9.

Suivant la tenue de l'enveloppe 1 il peut ne pas être utile de prévoir le chemin de roulement supérieur 8.

Les tubes 9 et 10 reposent sur la partie centrale du niveau 4 de la structure suivant l'invention. L'intérieur du tube 10 permet d'évacuer à l'extérieur de la structure, les fumées et l'air usé.

Entre les tubes 9 et 10, et par des orifices 12 pratiqués sur la périphérie supérieure du tube 9, est aspiré l'air de la structure qui est recyclé. L'air neuf sera introduit en grande partie par des bouches d'arrivée (non représentées ici) situées sur la périphérie du niveau 3.

Les autres détails de la figure 3 montrent un dispositif d'évacuation des fumées qui évite d'avoir une cheminée saillante sur le sommet de l'enveloppe sphérique, ce qui nuirait beaucoup à l'esthétique de l'ensemble vu de l'extérieur.

Un des systèmes 13 qui permettent de maintenir l'enveloppe sphérique 1 sur son axe de rotation V est représenté sur la figure 4. Les systèmes 13 sont solidaires du niveau 3, et placés à sa phériphérie.

Chaque système 13 est constitué d'une roulette 14 qui tourne autour d'un axe 15 et qui maintient une pression $F_3$ sur l'enveloppe sphérique 1 par le ressort 16. D'autres systèmes peuvent convenir pour réaliser la même fonction. Il est aussi possible de s'affranchir de ce dispositif si par ailleurs, le système de roulement de l'enveloppe sphérique 1 et l'enveloppe elle-même le permettent.

Pour parfaire le système de rotation de l'enveloppe il est prévu une étanchéité à l'intersection des plans de rotation. Sur la figure 5 le dispositif 17 est constitué d'une goulotte circulaire qui est plaquée contre l'embase 5. Cette goulotte est remplie d'un liquide neutre et peu enclin à s'évaporer, dans lequel coulisse un cerclage 21 solidaire de la base de l'enveloppe sphérique 1. On obtient par ce procédé une étanchéité parfaite.

Une jupe 18 constituée d'éléments souples permet d'améliorer l'isolement et protège le système de roulement.

Il est possible de mettre cette goulotte d'étanchéité à l'extérieur de l'embase circulaire 5 en la laissant naturellement se remplir avec les eaux de pluie.

Un joint 19 (figure 4) est interposé entre le niveau 3 et l'enveloppe 1, et, est constitué d'un matériau léger, type feutre ou feutrine, permettant à l'enveloppe sphérique 1 de glisser avec un minimum de frottement. Ce joint doit aussi avoir de très bonnes propriétés d'isolement thermique, et surtout, d'isolement acoustique.

Le joint 20 de la figure 3 doit être très souple afin d'absorber les différences de concentricité de l'enveloppe sphérique 1 avec le tube central 10.

Une corde en nylon 22 (figure 5) est maintenue en place sur la périphérie de l'embase de l'enveloppe sphérique 1 par l'intermédiaire d'une goulotte solidaire du cerclage 21, et joue le rôle d'une courroie pour l'embase circulaire qui lui sert de poulie.

Un système de motorisation est prévu qui sera mis en place à un endroit approprié du niveau 2 (exemple dans la buanderie). Ce système comporte des galets de renvoi et de guidage de la corde 22, un rouleau d'entraînement sur lequel la corde 22 va faire plusieurs tours afin d'avoir un coefficient d'adhérence suffisant pour entraîner l'enveloppe sphérique 1, un moteur électrique (non représenté ici) avec son réducteur de vitesse qui va faire fonctionner l'ensemble. On peut aussi prévoir un entraînement de secours par une manivelle qui peut être placée directement en bout du rouleau d'entraînement.

On peut imaginer d'autres systèmes d'entraînement qui pourront convenir tout aussi bien. Celui qui est décrit est très simple et facile à entretenir. Cette simplicité est permise compte tenu de la grande lenteur des mouvements (maximum 1 tour complet de l'enveloppe 1 en 1 minute) et du peu de déplacements à effectuer (en moyenne l'équivalent de 2 à 3 tours maximum par jour).

Le système de rotation de l'enveloppe sphérique 1, qui est décrit précédemment peut être réalisé de différentes façons. Toutefois, pour qu'il soit satisfaisant il faut respecter :

— une bonne géométrie des parties en contact pour la rotation avec des écarts faibles (chemins de roulements, guidages, joints d'étanchéité) ;

— une bonne qualité des composants roulants (chemins à billes, roues avec roulements à billes, etc...), ceci afin de maîtriser parfaitement les couples qui seront nécessaires pour l'entraînement, et avec un coefficient d'adhérence minimum au départ afin d'avoir un petit moteur pour cette animation ;

— un poids minimum de l'enveloppe sphérique 1 qu'il faudra déplacer en rotation et qui doit aussi, présenter une inertie minimale ;

— un système simple et robuste d'entraînement motorisé avec possibilité de reprise manuelle ;

— on prévoit également des capteurs de contrôles qui sont indispensables, pour le positionnement angulaire.

L'enveloppe sphérique 1 comporte une partie importante en baie vitrée 23 dont l'angle d'ouverture est ici d'environ 100°, avec un axe 24 incliné à 30° par rapport au plan horizontal. Cette inclinaison permet de capter un maximum du rayonnement solaire durant les périodes d'hiver et de mi-saison sous les latitudes de l'Europe, de l'Amérique du nord, etc... La baie vitrée 23 représente ici une surface d'environ 45 m$^2$. L'axe 24 de la baie vitrée va donc pivoter autour de l'axe vertical V et sera positionné en fonction de la saison, de la position et de l'intensité du soleil, etc...

La « paroi-volet » 25 sur les figures 1 et 2 est exposée au Nord de préférence, et a en regard de l'enceinte la même forme et la même surface que la baie vitrée 23. Elle est aussi inclinée à 30° par rapport au plan horizontal. Une pellicule d'air, de préférence d'environ 10 cm d'épaisseur, est ménagée entre cette « paroi-volet » 25 fixe et l'enveloppe sphérique 1 mobile.

La « paroi-volet » 25 est constituée de la même façon et avec les mêmes modules de construction, que l'enveloppe sphérique 1. La différence de rayon de préférence d'environ 25 cm, qui existe, entre ces deux formes sphériques n'est pas gênante compte tenu de l'espace prévu et qui n'a pas besoin d'être précis. Le poids de cette « paroi-volet » 25 est faible puisqu'il est constitué à partir de matériaux légers (environ 700 kg pour l'exemple choisi). Il sera donc fixé au sol par l'intermédiaire d'une structure de soutien à sa base et reposera sur la partie haute de l'enveloppe sur des roulettes placées sous le volet pour être protégées. Un système d'étanchéité 28 simple est prévu sur le pourtour de la « paroi-volet » 25 afin d'assurer un bon isolement thermique et acoustique, et, pour empêcher la prise au vent.

La « paroi-volet » 25 peut aussi être mobile en rotation autour de l'axe vertical (V) : on prévoit alors sa structure de soutien sur des roulettes guidées le long d'un rail circulaire concentrique à l'embase 5.

La « paroi-volet » 25 peut aussi être solidaire de deux bras latéraux articulés suivant un axe horizontal, passant par le centre (uniquement dans le cas d'une sphère). Cet axe est matérialisé par des pivots situés de part et d'autre, et diamétralement opposés de l'enveloppe 1.

Ces deux dernières possibilités permettent d'augmenter les combinaisons d'occultation, de protection et de captation d'énergie de la « paroi-volet » 25 qui est cette fois-ci mobile. Toutefois, la complexité du système est notablement accrue.

De même, il sera possible de prévoir un arrosage sur la partie supérieure permettant à l'eau de ruisseler le long de la paroi sphérique de l'enveloppe 1 avec un système de nettoyage incorporé. Cette possibilité d'arrosage permet aussi de maintenir l'été une température fraîche à l'intérieur de la structure en positionnant, tout ou partie, de la baie vitrée 23 sous la « paroi-volet » 25 et en faisant ruisseler de l'eau sur celle-ci qui prélèvera des calories en s'évaporant.

La baie vitrée 23 pourrait être constituée d'un vitrage en polycarbonate d'une seule épaisseur de 4 à 6 mm compte tenu de la possibilité de protection sous la « paroi-volet » 25 dès que les échanges thermiques avec l'extérieur deviennent défavorables.

De plus, il est intéressant dans certains cas, que les échanges thermiques puissent s'effectuer à

4

**0 195 795**

travers la baie vitrée ainsi qu'il a été dit plus haut.

L'utilisation du polycarbonate, ou d'un autre composé synthétique transparent avec une seule épaisseur, diminue le poids et le coût de cette baie vitrée tout en renforçant la sécurité par rapport à une solution avec double ou triple vitrage en verre.

Dans la structure suivant la figure 1, il est prévu deux emplacements d'accès privilégiés au niveau 3 de la figure 1. Un premier accès, dit principal, suivant l'axe 31 côté Est situé à l'angle de 72° par rapport à l'axe Nord (N), et un deuxième accès (sur balcon ou autre), suivant l'axe 32 côté Ouest situé à l'angle 288° (— 72°) par rapport à l'axe Nord (N).

Il est, par ailleurs, prévu sur la périphérie de l'enveloppe sphérique 1 :
— 7 portes-fenêtres avec volets coulissants qui sont motorisés et télécommandables,
— 1 porte-fenêtre située au niveau 4 à l'opposé de la baie vitrée,
— 3 portes-fenêtres situées au niveau principal 3 respectivement à 72°, 180°, 288°, de l'axe Nord (N) pour une position de 180° (plein Sud) de l'axe 24 de la baie vitrée,
— 3 portes vitrées au niveau inférieur situées sous les portes vitrées du niveau principal 3 et donnant directement accès sur la terrasse inférieure ou le sol.

La structure de la figure 1 constitue en ensemble d'habitation en tant que tel. Il est toutefois possible de prévoir une partie en sous-sol supplémentaire d'accueil de cette structure, qui contribuera encore à améliorer la qualité de vie et les possibilités de l'ensemble.

Sur la figure 1 est représenté un espace bionique ou encore bioclimatique qui se décompose comme suit :
— une terrasse circulaire 33 sur laquelle repose la structure légèrement décentrée sur l'arrière ; cette terrasse 33 repose elle-même sur deux murs porteurs 34 formant un angle de 90° et sur des parois disposées sous la périphérie inférieure de la terrasse 33 ;
— sur l'avant exposé plein Sud de préférence, une baie vitrée 35 en arc de cercle sur environ 120° et inclinée à 45°, permet une exposition maximale au soleil ; cette baie vitrée sera décomposée en panneaux droits tous identiques, assemblés en deux groupes et pouvant coulisser sur deux rails concentriques 36 et 37 ; il est possible d'ouvrir, tout ou partie, cette baie vitrée jusqu'à recouvrement sur la moitié de la longueur totale ; cette ouverture variable suivant la convenance, pourra être orientée Sud-Est ou Sud-Ouest ;
— une piscine 38, en forme d'arc de cercle, est prévue sous cette baie vitrée afin d'être exposée au mieux au soleil ;
— sur le côté gauche vue de face, il est prévu un passage 39 suffisant pour garer une voiture ; de même, sur le côté droit il est prévu un passage d'environ un mètre de largeur.

Deux rails concentriques situés sur le haut en 40 de la baie vitrée 35 la soutiennent et lui permettent de coulisser.

Différents systèmes et automatismes simples sont prévus pour occulter la baie vitrée 35 en fonction de l'ensoleillement en éliminant ou récupérant les calories disponibles suivant la saison et le degré d'ensoleillement.

De même, la piscine 38 est recouverte en permanence par un système qui lui permet de récupérer au mieux les calories disponibles en surface en évitant l'évaporation qui rendrait cet espace saturé d'humidité. Cette couverture de piscine 38 peut s'escamoter dans le fond.

Les calories ou frigories récupérées sur la baie vitrée 35 et sur la piscine 38 peuvent être stockées dans les fondations de l'espace bionique (système accumulateur-échangeur à chaleur latente). Ces calories ou frigories emmagasinées seront ensuite utilisées pour chauffer ou refroidir l'espace bionique et la structure par un système à circulation d'air pulsé approprié.

L'intérieur central de l'espace bionique est utilisable à des fins de détente : gymnastique — jeux — piscine — bricolage — réceptions — etc... Il se prête bien aussi à une décoration originale et à la culture de plantes exotiques nécessitant de la lumière, de la chaleur et de l'humidité.

Il est prévu aussi un hall d'entrée 41 et un escalier/ascenseur 42 qui part du fond de l'espace bionique pour mettre en communication, de l'intérieur, trois niveaux (espace bionique, niveau 2, niveau 3).

Une rampe 43 est placée autour de la terrasse 33 ainsi qu'un escalier extérieur 44 permettant d'accéder à la terrasse 33, avec un autre escalier dans son prolongement permettant ensuite d'atteindre l'entrée principale de la structure qui est située suivant l'axe 31.

L'enceinte présente avantageusement une structure modulaire comprenant des modules ou panneaux courbes ayant une surface de forme sensiblement régulière pentagonale, et/ou hexagonale voire triangulaire, les côtés des pentagones, hexagones et le cas échéant triangles équilatéraux étant des arcs de courbe sensiblement égaux entre eux. Un tel découpage de l'enceinte en modules présente un bon compromis entre les exigences esthétiques et techniques, eu égard aux dimensions, tailles, poids, surfaces, résistances, transportabilité, fabrication et montage desdits modules.

De façon avantageuse l'élément 25 obturant la partie vitrée est également réalisé de façon modulaire.

Comme représenté à la figure 6 chaque module peut être réalisé au moyen de résines armées, côté intérieur de l'enveloppe sphérique 1 une première coque 50 et 51, de faible épaisseur (environ 3 mm), peut être moulée en résine armée en plusieurs couches. Il en est de même côté extérieur pour les coques 52 et 53. Ces coques sont ensuite emboîtées et soudées entre elles afin d'être complètement étanches. L'espace entre ces deux coques est préalablement renforcé par une structure alvéolaire légère mais

5

résistante 57 et 58, qui peut aussi être un remplissage de mousse injectable à cellules ouvertes.

Un ensemble 50, 52, 57 ainsi constitué peut être un élément pentagonal ou hexagonal préfabriqué. Il en est de même pour un ensemble 51, 53, 58 avec une vitre 56 qui peuvent constituer un élément vitré pentagonal ou hexagonal.

Une valve 59 permet de faire un vide partiel dans les éléments autres que baie vitrée pour améliorer encore l'isolation thermique et acoustique avec l'extérieur. Un organe de contrôle visuel et un « micro-contacteur » seront aussi prévus afin de pouvoir vérifier la qualité du vide partiel de chaque élément pour le reconstituer périodiquement. De même, le « micro-contacteur » qui est actif contact fermé lorsque le vide partiel est satisfaisant, pourra signaler une fuite à l'organe central de contrôle automatiquement. Cette fuite peut intervenir naturellement dans le temps si le vide partiel n'a pas été reconstitué, il peut aussi intervenir brutalement en cas d'effraction déclenchant ainsi une alarme.

Les différents éléments sont ensuite assemblés entre eux par l'intermédiaire de bandes 55 collées et/ou boulonnées.

Un espace 54 est prévu dans les joints d'assemblage des éléments pour permettre le passage des câbles de télécommandes, télésignalisations, alimentations électriques, etc...

Pour les éléments vitrés, des joints 60 et des gouttières 61 doivent permettre d'assurer l'étanchéité avec une fixation par serrage suivant 62.

Selon un autre mode de réalisation les modules constituant l'enceinte peuvent être des panneaux de construction légers, par exemple en béton colloïdal léger (en abrégé BCL) de densité inférieure ou égale à 1 et de résistance à la traction et à la flexion élevée, les vitres des panneaux vitrés pouvant être insérées dans une armature en BCL, l'assemblage de l'ensemble des panneaux de l'enceinte étant effectué selon un mode connu en soi.

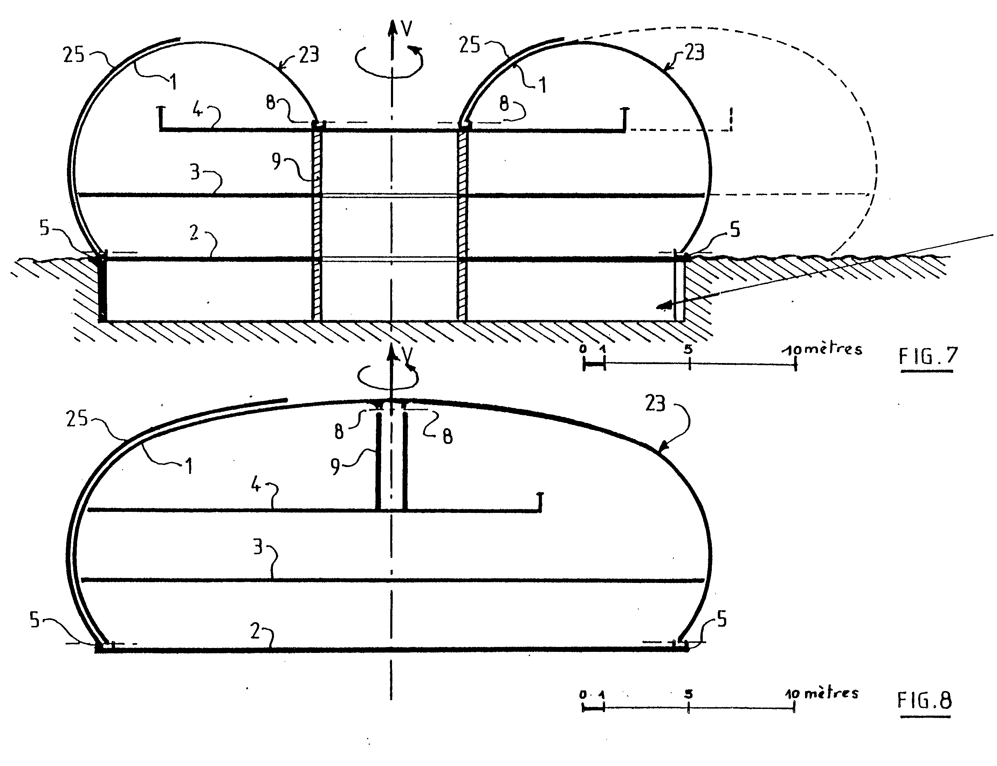

L'exemple de réalisation de la figure 7 concerne une double structure architecturale orientable approximativement à l'échelle 1/200° pour un édifice plus important que celui de la figure 1 et qui pourrait être une salle d'exposition, un musée, un restaurant, ou édifice analogue. Le principe de fonctionnement est identique à ce qui a été décrit précédemment avec la possibilité de disposer de deux « parois-volets » 25 et deux baies vitrées 23. Dans ce cas les trois niveaux de la structure de l'invention totalisent approximativement 1 625 m² aménageables pour la section en anneau circulaire et 3 700 m² pour la section ovale représentée en pointillé. L'axe de rotation de chaque enceinte 1 est ici incliné par rapport à la verticale.

L'exemple de réalisation de la figure 8 concerne une structure architecturale selon l'invention approximativement à l'échelle 1/200° pour un édifice de section ovale abritant toujours trois niveaux, et comportant au total 1 550 m² aménageables.

La construction des édifices suivant les figures 7 et 8 est particulièrement aisée en mettant d'abord en place l'intérieur de la structure bâtie à partir d'une colonne centrale avec des poutres et piliers allant vers l'extérieur. La structure extérieure vient se monter ensuite et repose sur un chemin de roulement motorisé. L'accès principal dans ces structures, peut se faire par une rampe inclinée partant de l'extérieur et aboutissant en sous-sol au pied de la cage de distribution intérieure.

On a donné ci-après des informations nullement limitatives en ce qui concerne une réalisation d'une maison individuelle selon la figure 1 avec son espace bionique.

A. Structure architecturale

| | |
|---|---|
| Diamètre de l'enveloppe sphérique extérieur | 9 mètres |
| Hauteur hors tout | 8 mètres |
| Diamètre du cercle apparent de la calotte vitrée | 6,5 mètres |
| Angle d'ouverture de la calotte vitrée, environ | 100° |
| Angle d'inclinaison de l'axe de la calotte vitrée, par rapport à l'horizontal | 30° |
| Surface correspondante vitrée, environ | 40 m² |
| Surface de la calotte sphérique arrière, qui constitue la « paroi-volet » fixe, correspondant à la baie vitrée, environ | 45 m² |
| Surface extérieure (hors sol) | 226 m² |
| Surface au sol | 33 m² |
| Surface totale extérieure | 259 m² |
| Volume total | 363 m² |
| Diamètre intérieur du cercle de base, environ | 5,5 m |
| Diamètre habitable équivalent, correspondant au niveau inférieur | 6,5 m |
| Surface habitable correspondante | 33 m² |
| Diamètre utile du niveau intermédiaire habitable | 8,5 m |
| Surface habitable correspondante | 56,7 m² |
| Diamètre utile du niveau supérieur habitable | 6,75 m |
| Surface habitable correspondante (sans l'espace vide sur le salon) | 21 m² |
| Surface de l'espace vide sur salon | 15 m² |
| Surface totale habitable, environ | 110 m² |
| Poids approximatif d'un élément pentagonal constituant l'enveloppe sphérique | 80 Kg |

| | |
|---|---|
| Poids approximatif d'un élément hexagonal | 120 Kg |
| Poids approximatif de toute l'enveloppe sphérique | 3 tonnes |
| Poids approximatif de la « paroi-volet » arrière | 700 Kg |

Roulement de l'enveloppe sphérique à la base et sur la partie supérieure, sur billes ou roulettes à billes.

Maintien latéral et guidage de l'enveloppe sphérique par système de roulettes à billes avec ressorts fixés sur la périphérie du plateau intermédiaire.

Entraînement de l'enveloppe sphérique par système courroie/corde nylon, moteur électrique réducteur de puissance    2

Vitesse d'entraînement    0,5 tour/min.

Déplacement angulaire autour de l'axe vertical de — 108° à + 468° (soit au total 1,6 tour).

Puissance consommée en 24 h pour tous les automatismes, qui peut être limitée à    100 VA Ouvertures constituées par des portes-fenêtres (PF) motorisées avec volets motorisés coulissants de haut en bas dans l'enveloppe sphérique :

— niveau inférieur : 3 PF

— niveau principal : 3 PF

— niveau supérieur : 1 PF

Escalier d'accès extérieur partant du niveau de la terrasse circulaire et débouchant sur un palier situé à 72° par rapport à l'axe Nord.

Escalier ascenseur intérieur qui distribue l'espace bionique, le niveau inférieur et le niveau principal.

Escalier en colimaçon qui fait la liaison entre le niveau principal et le niveau supérieur.

Climatisation par air pulsé avec stockage d'énergie par chaleur latente dans le sol.

Aménagement des trois niveaux :

— Niveau inférieur (33 m²) :

1 chambre/bureau,

1 chambre,

1 buanderie,

1 salle de bains et WC.

— Niveau principal (56,7 m²) :

1 cuisine au Nord-Ouest,

WC,

Hall d'entrée,

Placards de rangement situés au Nord-Est. Sur toute la partie avant le séjour avec le coin-repas, mini-bar, bassin-baignoire, cheminée située à environ 0,75 mètre en arrière du centre.

— Niveau supérieur (21 m²) :

équipé en chambre principale sur mezzanine avec un espace libre surplombant le séjour, salle de bains et WC, rangements et stockage eau chaude.

Circuit d'aspiration de la poussière.

Circuit de télécommande, télésignalisation, alarme intégrés à la structure.

Capteurs de position, température, ensoleillement, alarmes, niveaux d'eaux, etc... raccordés sur la micro-processeur.

Micro-processeur et programmes de fonctionnement de l'ensemble avec possibilité de reprise en mode manuel.

Ensemble chargeur-batteries donnant une autonomie de fonctionnement à la structure architecturale suivant l'invention de 1 semaine.

B. Espace bionique

| | |
|---|---|
| Diamètre de la terrasse supérieure | 11  m |
| Surface aménageable totale | 110 m² |
| Angle d'ouverture de la baie vitrée à partir de son centre, environ | 120° |
| Inclinaison des vitres de la baie | 45° |
| Longueur de la piscine en arc de cercle sous la baie vitrée | 10,3 m |
| Largeur de la piscine | 2,5 m |
| Profondeur de la piscine | 1,5 m |
| Surface restante autour du bassin pour loisir, approximativement | 45 m² |

Autres aménagements :

— Hall d'entrée,

— Cave + cellier,

— Studio complet pour habitation.

Local technique derrière l'escalier-ascenseur.

Possibilité de garer une voiture sur un côté de la piscine.

Possibilité de stockage en chaleur latente sous la dalle jusqu'à    40 m³ Système de récupération de calories, ou de frigories, sur la baie vitrée et la piscine.

Etc...

0 195 795

Selon le même mode de réalisation on a également prévu des maisons individuelles de environ 125 à environ 145 m² habitables offrant plus de confort que la réalisation visée ci-dessus, ces maisons individuelles étant chacune pourvue d'un espace bionique.

Bien entendu, l'invention décrite n'est nullement limitée aux modes de réalisation décrits et représentés à titre d'illustration ci-dessus. Elle est susceptible de très nombreuses variantes, accessibles à l'homme de l'art, suivant les critères recherchés, et sans que l'on s'écarte pour cela, du cadre de l'invention.

C'est ainsi que l'on peut extrapoler des formes de section sensiblement ovale beaucoup plus grandes permettant d'abriter des bureaux, des théâtres, des restaurants, et d'autres locaux publics leur donnant un aspect futuriste, fonctionnel et très attractif.

Ainsi, en variante, on peut prévoir que l'élément d'obturation (25) de la partie vitrée de l'enceinte soit situé à l'intérieur ; dans ce type de réalisation ledit élément d'obturation est fixe et fait partie de l'ossature.

D'une manière générale il semble que la structure orientable selon l'invention ne doive pas être très haute afin de mieux s'intégrer dans le paysage environnant, et qu'il soit intéressant de ne pas dépasser trois niveaux aménageables, le troisième niveau comportant un vide plongeant sur le deuxième niveau, qui est le niveau principal d'activité.

**Revendications**

1. Structure architecturale orientable, susceptible d'être habitée, comportant une enceinte extérieure (1) et une ossature (2, 3, 4) logée à l'intérieur de ladite enceinte, ladite enceinte (1) présentant une surface de révolution et étant susceptible d'être mobile en rotation autour de son axe (V), l'espace situé à l'intérieur de ladite enceinte comprenant une ossature fixe de façon que l'enceinte (1) puisse tourner alors que l'ossature (2, 3, 4) reste fixe.

2. Structure selon la revendication 1, caractérisée en ce qu'elle comprend une enceinte (1) comportant au moins une partie vitrée (23) choisie parmi l'ensemble comprenant les baies vitrées et les portes-fenêtres et un élément (25) situé à l'extérieur de ladite enceinte susceptible d'occulter au moins partiellement ladite partie vitrée (23) en fonction de l'orientation de l'enceinte.

3. Structure selon la revendication 1, caractérisée en ce que l'enceinte (1) est une calotte de révolution ayant dans un plan passant par l'axe V une section sensiblement circulaire ou ovale.

4. Structure selon la revendication 2, caractérisée en ce que l'élément (25) situé à l'extérieur de ladite enceinte (1) et susceptible d'occulter au moins partiellement ladite partie vitrée (23) est fixe.

5. Structure selon la revendication 2, caractérisée en ce que l'élément d'occultation (25) est mobile en rotation autour de l'axe (V).

6. Structure selon l'une quelconque des revendications 1 et 2, caractérisée en ce que l'ossature comprend un dispositif de roulement sur lequel repose l'ensemble (1).

7. Structure selon la revendication 6, caractérisée en ce que l'enceinte est montée sur ledit dispositif de roulement de façon à pouvoir pivoter sur une embase circulaire (5) disposée sur l'ossature.

8. Structure selon la revendication 1, caractérisée en ce que l'ossature fixe comprend au moins un palier (2, 3, 4).

9. Structure selon la revendication 1, caractérisée en ce que chaque palier (2, 3, 4) est muni d'au moins un moyen de roulement monté de façon étanche pour la rotation de l'enceinte (1) par rapport à ladite ossature.

10. Structure selon la revendication 1, caractérisée en ce que l'enceinte (1) est modulaire et est constituée de panneaux courbes de forme géométrique régulière.

11. Structure selon la revendication 1, caractérisée en ce que l'axe (V) de rotation de l'enceinte (1) est vertical.

12. Structure selon la revendication 1, caractérisée en ce que l'axe (V) de rotation de l'enceinte (1) est incliné par rapport à la verticale.

13. Structure selon la revendication 1, caractérisée en ce qu'elle comprend une enceinte (1) comportant au moins une partie vitrée (23) choisie parmi l'ensemble comprenant les baies vitrées et les portes-fenêtres et un élément (25) fixe, situé à l'intérieur de ladite enceinte et faisant partie de l'ossature, susceptible d'occulter au moins partiellement ladite partie vitrée (23) en fonction de l'orientation de l'enceinte.

**Claims**

1. An orientable architectural structure which can be habitable, comprising an external enclosure (1) and a skeleton (2, 3, 4) housed inside the said enclosure, whereby said enclosure (1) defines a surface of revolution and is able to rotate about its axis (V), and the space situated inside the said enclosure contains a fixed non-movable skeleton, in such a manner that the enclosure (1) can rotate while the skeleton (2, 3, 4) remains fixed.

2. An orientable architectural structure according to claim 1, comprising an enclosure (1) including

8

at least one glazed part (23) selected from the group comprising picture windows and French windows, and a screening element (25) situated outside the enclosure that can screen at least partially the said glazed part (23) according to the direction in which the enclosure is facing.

3. The structure according to claim 1, wherein the enclosure (1) is a calotte of revolution having on a plane passing through the axis (V) a cross section that is approximately circular or oval.

4. The structure according to claim 2, wherein the element (25), situated outside the said enclosure (1) and able to screen at least partially the said glazed part (23), is fixed and non-movable.

5. The structure according to claim 2, wherein the screening element (25) is rotatable about the axis (V).

6. The structure according to claim 1 or 2, wherein the skeleton includes a bearing system upon which the enclosure (1) rests.

7. The structure according to claim 6, wherein the enclosure is mounted upon the said bearing system in a way such that it can pivot upon a circular footing (5) set out on the skeleton.

8. The structure according to claim 1, wherein the fixed skeleton includes at least one floor (2, 3, 4).

9. The structure according to claim 1, wherein each floor (2, 3, 4) is provided with at least one means of rolling mounted in a sealed way, for rotation of the enclore (1) relative to the said skeleton.

10. The structure according to claim 1, wherein the enclosure (1) is modular and consists of curved panels of a regular geometric shape.

11. The structure according to claim 1, wherein the axis (V) of rotation of the enclosure (1) is vertical.

12. The structure as claimed in claim 1, wherein the axis (V) of rotation of the enclosure (1) is inclined to the vertical.

13. The structure according to claim 1, comprising an enclosure (1) including at least one glazed part (23) selected from the group comprising picture windows and French windows, and a fixed non-movable element (25) situated inside the said enclosure that can screen at least partially the said glazed part (23) according to the direction in which the enclosure is facing.

## Patentansprüche

1. Bewohnbares, drehbares Gebäude mit einer äußeren Hülle (1) und einem innerhalb dieser Hülle angeordneten Skelett (2, 3, 4), bei dem dei Hülle (1) eine rotationssymmetrische Oberfläche besitzt und um ihre Achse (V) drehbar ist, und bei dem der innerhalb der Hülle (1) liegende Raum ein feststehendes Skelett enthält, so daß die Hülle (1) sich drehen kann, während das Skelett (2, 3, 4) fest bleibt.

2. Gebaüde nach Anspruch 1, dadurch gekennzeichnet, daß es eine Hülle (1) umfaßt, die zumindest in einem Teil (23) verglast ist, wobei dieser Teil aus verglasten Öffnungen und/oder Fenstertüren besteht, und daß ein außerhalb der Hülle (1) angeordnetes Element (25) vorgesehen ist, mit dem sich der verglaste Teil in Abhängigkeit von der Orientierung der Hülle (1) zumindest teilweise verdunkeln läßt.

3. Gebäude nach Anspruch 1, dadurch gekennzeichnet, daß die Hülle (1) eine rotationssymmetrische Kalotte ist, die in einer durch die Achse (V) verlaufenden Ebene einen zumindest annähernd kreisförmigen oder ovalen Querschnitt besitzt.

4. Gebäude nach Anspruch 2, dadurch gekennzeichnet, daß das außerhalb der Hülle (1) angeordnete Element (25) für die zumindest teilweise Verdunkelung des verglasten Teils (23) feststehend angeordnet ist.

5. Gebäude nach Anspruch 2, dadurch gekennzeichnet, daß das Verdunkelungselement (25) um die Achse (V) drehbar ist.

6. Gabäude nach Anspruch 1 und 2, dadurch gekennzeichnet, daß das Skelett eine Wälzvorrichtung aufweist, auf der die Hülle (1) ruht.

7. Gebäude nach Anspruch 6, dadurch gekennzeichnet, daß die Hülle (1) auf der Wälzvorrichtung derart montiert ist, daß sie auf einem an dem Skelett angeordneten Sockel rotieren kann.

8. Gebäude nach Anspruch 1, dadurch gekennzeichnet, daß das feste Skelett wenigstens ein Podest (2, 3, 4) aufweist.

9. Gebäude nach Anspruch 1, dadurch gekennzeichnet, daß jedes der Podeste (2, 3, 4) wenigstens ein abgedichtet montiertes Wälzmittel für die Drehung der Hülle (1) relativ zu dem Skelett aufweist.

10. Gebäude nach Anspruch 1, dadurch gekennzeichnet, daß die Hülle (1) modular ausgebildet ist und aus gekrümmten Tafeln mit geometrisch regelmäßiger Form besteht.

11. Gebäude nach Anspruch 1, dadurch gekennzeichnet, daß die Drehachse (V) der Hülle (1) vertikal angeordnet ist.

12. Gebäude nach Anspruch 1, dadurch gekennzeichnet, daß die Drehachse (V) der Hülle (1) gegenüber der Vertikalen geneigt ist.

13. Gebäude nach Anspruch 1, dadurch gekennzeichnet, daß es eine Hülle (1) umfaßt, die zumindest in einem Teil (23) verglast ist, wobei dieser Teil aus verglasten Öffnungen und/oder Fenstertüren besteht, und daß ein innerhalb der Hülle (1) angeordnetes einen Bestandteil des Skeletts bildendes, feststehendes Element (25) vorgesehen ist, mit dem sich der verglaste Teil in Abhängigkeit von der Orientierung der Hülle (1) zumindest teilweise verdunkeln läßt.

FIG. 1

FIG. 2

FIG.4

FIG.3

FIG.5

FIG.6

0 195 795

FIG.7

FIG.8

3